# EUROPÄISCHE PATENTSCHRIFT

(11) **EP 3 271 856 B1**
(45) Veröffentlichungstag und Bekanntmachung des Hinweises auf die Patenterteilung: **17.02.2021**
(21) Anmeldenummer: 16709766.6
(22) Anmeldetag: 11.03.2016
(51) Int. Cl.: G06F 21/54

(54) **VERFAHREN UND VORRICHTUNG ZUM VERARBEITEN UND ÜBERTRAGEN VON DATEN INNERHALB EINES FUNKTIONAL SICHEREN ELEKTRISCHEN, ELEKTRONISCHEN UND/ODER PROGRAMMIERBAR ELEKTRONISCHEN SYSTEMS**
METHOD AND DEVICE FOR PROCESSING AND TRANSMITTING DATA WITHIN A FUNCTIONALLY SECURE, ELECTRICAL, ELECTRONIC AND/OR PROGRAMMABLE ELECTRONIC SYSTEM
PROCÉDÉ ET DISPOSITIF DE TRAITEMENT ET DE TRANSFERT DE DONNÉES DANS UN SYSTÈME FONCTIONNELLEMENT SÛR ÉLECTRIQUE, ÉLECTRONIQUE ET/OU ÉLECTRONIQUE PROGRAMMABLE

(30) Priorität: 13.03.2015 DE 102015103740
(43) Veröffentlichungstag der Anmeldung: 24.01.2018
(73) Patentinhaber: Phoenix Contact GmbH & Co. KG, 32825 Blomberg (DE)
(72) Erfinder: FRANK, Tobias, 32657 Lemgo (DE); SALZMANN, Rolf, 32657 Lemgo (DE)
(74) Vertreter: Blumbach · Zinngrebe Patentanwälte PartG mbB
(86) Internationale Anmeldenummer: PCT/EP2016/055236
(87) Internationale Veröffentlichungsnummer: WO 2016/146504

(56) Entgegenhaltungen:
- EP-A1- 1 654 850
- EP-A1- 1 921 560
- EP-A2- 0 845 733
- WO-A1-2005/085971

## Beschreibung

Die Erfindung betrifft Verfahren und Vorrichtungen zum Verarbeiten und Übertragen von Daten innerhalb eines funktional sicheren elektrischen, elektronischen und/oder programmierbar elektronischen Systems, welches aus wenigstens zwei Sub-Systemen aufgebaut wird.

Bekanntermaßen werden funktional sichere elektrische, elektronische und programmierbar elektronische Systeme in der internationalen Norm IEC 61508 bzw. in der im Wesentlichen inhaltsgleichen Europäischen Norm EN 61508 unter anderem auch hinsichtlich deren Entwicklung beschrieben. Die darin vorgegebenen Anforderungen an den Entwicklungsprozess von sicheren Systemen führen zu signifikant höherem Aufwand und benötigtem Entwicklungsbudget im Vergleich zur Entwicklung von Standardsystemen. Dabei nehmen die Anforderungen mit zunehmendem Sicherheitsintegritätslevel ("SIL"; SIL1 bis SIL4) zu.

Auch der Einsatz von Komponenten, die nicht den Anforderungen der IEC 61508 für sichere Systeme genügen, ist normativ geregelt.

So ist z.B. im Teil 3 "Anforderungen an Software" der IEC 61508 in der Fassung von 2010 (IEC 61508-3:2010) unter dem Absatz 7.4.2.8 definiert:
"Wenn die Software sowohl Sicherheitsfunktionen als auch Nichtsicherheitsfunktionen umsetzt, muss die gesamte Software als sicherheitsbezogen behandelt werden, sofern nicht angemessene Maßnahmen sicherstellen, dass Versagen von Nichtsicherheitsfunktionen Sicherheitsfunktionen nicht nachteilig beeinflussen können",
sowie unter dem Absatz 7.4.2.9:
   "Wenn die Software Sicherheitsfunktionen verschiedener Sicherheitsintegritätslevel umsetzt, muss die gesamte Software so behandelt werden, als ob sie zum höchsten Sicherheitsintegritätslevel gehört, sofern nicht ausreichende Unabhängigkeit zwischen den Sicherheitsfunktionen der verschiedenen Sicherheitsintegritätslevel im Entwurf gezeigt werden kann. Es muss dargelegt werden, dass entweder (1) die Unabhängigkeit sowohl im räumlichen und zeitlichen Bereich erreicht wird, oder (2) jede Verletzung der Unabhängigkeit beherrscht wird. Die Rechtfertigung für diese Unabhängigkeit muss dokumentiert werden."

Mit dem Begriff "Sicherheitsintegritätslevel" (SIL; oder auch Sicherheitsanforderungsstufe) wird somit über den jeweiligen Level ein bestimmtes Maß für die notwendige bzw. erreichte Wirksamkeit von Sicherheitsfunktionen zur Risikominderung definiert. Wenn keine sicherheitsgerichteten (auch als sicherheitsbezogen oder sicherheitsrelevant im Rahmen der Erfindung bezeichnet) Anforderungen gelten, so ist die Entwicklung nach den normalen Standards des betrieblichen Qualitätsmanagements durchzuführen. Darüber hinaus stellt der Sicherheitsintegritätslevel SIL1 die geringsten Anforderungen. Je höher der Sicherheitsintegritätslevel, desto höher sind auch die Anforderungen an die Sicherheit. Hierbei betrifft der Begriff "Sicherheit" im Rahmen der Erfindung sowie in der Beschreibung und den Ansprüchen, soweit nicht anderes angegeben ist, die funktionale Sicherheit.

Die funktionale Sicherheit gemäß der Normreihe IEC 61508 umfasst hierbei ferner die Anwendung diverser Methoden zur Beherrschung von Fehlern, wie bspw. die Vermeidung systematischer Fehler in der Entwicklung, die Überwachung im laufenden Betrieb zur Erkennung von zufälligen Fehlern und/oder die sichere Beherrschung von erkannten Fehlern und der Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette (Safety-Loop) bezeichnet, angefangen z.B. von der Anforderung einer Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Nicht zu dieser funktionalen Sicherheit gehört demnach die elektrische Sicherheit.

Ist durch geeignete Maßnahmen somit gewährleistet, dass ein elektrisches, elektronisches und/oder programmierbar elektronisches System, aber auch eine einzelne Hardware- und/oder Software-Komponente eine bestimmte Sicherheitsfunktion wirksam erfüllt, gilt dieses System bzw. die jeweilige Komponente im Rahmen der nachfolgenden Beschreibung und der Ansprüche als sicher. Gelten für ein System, aber auch für eine einzelne Hardware- und/oder Software-Komponente keine sicherheitsgerichteten Anforderungen und ist somit für das System oder die einzelne Hardware- und/oder Software-Komponente nicht das Erfüllen einer bestimmten Sicherheitsfunktion durch geeignete Maßnahmen gewährleistet, gilt dieses System bzw. die jeweilige Komponente im Rahmen der nachfolgenden Beschreibung und der Ansprüche als nicht-sicher oder auch als Standard-System bzw. Standard-Komponente.

Aus der DE 10 2004 020 994 B4 ist ein Verfahren und eine Vorrichtung zum computergestützten Konstruieren einer sicherheitsgerichteten elektrischen Schaltung bekannt Aus der WO2005085971 ist ein Verfahren zum Transfer von Dokumenten zwischen Domains mit unterschiedlichen Sicherheitsleveln bekannt.

Dementsprechend werden eine Vielzahl von Schaltungskomponenten bereitgestellt, ausgewählt und verknüpft, wobei ferner eine Vielzahl von Regelsätzen bereitgestellt wird und jeder Regelsatz wiederum eine Vielzahl von sicherheitstechnischen Konstruktionsregeln beinhaltet, wobei zumindest einer der Regelsätze eine Konstruktionsregel beinhaltet, die mehrkanalig-redundante Ausgangssignale der Schaltungskomponenten und/oder einen Rückführkreis für jedes Ausgangssignal erfordert. Die elektrische Schaltung ist ferner in Teilbereiche unterteilt und für jeden der Teilbereiche wird vor dem Auswählen und Verknüpfen der Schaltungskomponenten ein Regelsatz festgelegt und der hierdurch definierte Regelsatz ausgewählt und es wird geprüft, ob die ausgewählten und verknüpften Schaltungskomponenten den Konstruktionsregeln dieses definierten Regelsatzes vollständig entsprechen, so dass jede nachfolgende Auswahl und/oder Verknüpfung von Schaltungskomponenten in Abhängigkeit von dem ausgewählten definierten Regelsatz freigegeben oder verhindert wird, wobei der definierte Regelsatz angezeigt wird.

Hierdurch soll das Konstruieren von sicherheitsgerichteten Schaltungen einfacher und schneller möglich sein, ohne dass die Fehlersicherheit der konstruierten Schaltung beeinträchtigt wird, wobei sich das Konstruieren hierbei auf das Konstruieren einer bestimmten Schaltung als Gesamtsystem bezieht. Denn zunächst werden einzelne Regelsätze, die jeweils eine Vielzahl von sicherheitstechnischen Konstruktionsregeln beinhalten, für diese Schaltung definiert und ausgewählt und anschließend die Schaltungskomponenten ausgewählt und verknüpft, die den Konstruktionsregeln der jeweiligen Regelsätze entsprechen.

Eine Aufgabe der vorliegenden Erfindung besteht darin, ein Verfahren und eine Vorrichtung auszubilden, mit welchen basierend auf sicheren Komponenten und gegebenenfalls auch auf Standard-Komponenten ein System aufgebaut und betrieben werden kann, derart dass die normativen Anforderungen an ein sicheres System erfüllt sind, und also das zu entwickelnde System eine Verletzung der Unabhängigkeit für dessen Beherrschung, insbesondere auch die Verletzung der Unabhängigkeit zwischen Standard und sicheren Sub-Systemen, sicher erkennen kann.

Die Aufgabe wird gemäß der Erfindung durch ein Verfahren und eine Vorrichtung gemäß den anhängigen unabhängigen Ansprüchen gelöst. Vorteilhafte und zweckmäßige Weiterbildungen sind Gegenstand der jeweiligen Unteransprüche.

Erfindungsgemäß ist somit ein Verfahren zum Verarbeiten und Übertragen von Daten innerhalb eines funktional sicheren elektrischen, elektronischen und/oder programmierbar elektronischen Systems vorgeschlagen, welches aus wenigstens zwei Sub-Systemen aufgebaut wird, welche jeweils wenigstens eine sichere Hardware- und/oder Software-Komponente umfassen und jeweils einem bestimmten Sicherheitslevels für eine funktional sichere Datenverarbeitung genügen. Das Verfahren sieht ferner vor, dass die Daten mittels der sicheren Hardware- und/oder Software-Komponente eines ersten der Sub-Systeme zu funktional sicheren Daten eines ersten Sicherheitslevels verarbeitet werden und durch dieses erste Sub-System wenigstens ein Kennzeichnungsattribut zu diesen Daten hinzugefügt wird, welches die Eignung dieser Daten für den Einsatz dieses ersten Sicherheitslevels kennzeichnet. Diese Daten einschließlich des hinzugefügten Kennzeichnungsattributs werden dann von diesem ersten Sub-System an ein zweites dieser Sub-Systeme übertragen und durch dieses zweite Sub-System folglich empfangen.

Das empfangene Kennzeichnungsattribut wird anschließend durch das zweite Sub-System mittels dessen sicherer Hardware- und/oder Software-Komponente dahingehend geprüft, ob der Sicherheitslevel, den dieses Kennzeichnungsattribut kennzeichnet, gegenüber dem Sicherheitslevel, welchem das zweite Sub-System genügt, gleich oder ungleich ist. Wenn die Prüfung ungleiche Sicherheitslevel ergibt, werden die Daten anschließend basierend auf dem geringeren Sicherheitslevel funktional sicher weiterverarbeitet.

Ein wesentlicher Vorteil hierbei ist, dass jedes Sub-System und folglich im Wesentlichen jedes Bauteil oder Gerät einen eigenen, auch jeweils unterschiedlichen Sicherheitslevel genügen kann und dennoch aus diesen Sub-Systemen wiederum ein System zusammensetzbar ist, welches auch in dessen Gesamtheit wiederum einem Sicherheitslevel genügt. Da hierbei das aus verschiedenen Sub-Systemen aufgebaute System unterschiedliche Sicherheitslevel erkennt und eine Weiterverarbeitung von Daten stets auf dem geringeren von zwei unterschiedlichen Sicherheitsleveln durchgeführt wird, können durch die Erfindung die Anforderung an ein funktional sicheres System erfüllt werden, obgleich dieses Baukasten-artig aus Sub-Systemen unterschiedlicher Sicherheitslevel aufgebaut ist.

Zur Durchführung des Verfahrens schlägt die Erfindung ferner eine Vorrichtung vor, die eine sichere Hardware- und/oder Software-Komponente umfasst, die einem bestimmten Sicherheitslevels für eine funktional sichere Datenverarbeitung genügt.

Die sichere Hardware- und/oder Software-Komponente ist hierbei dazu eingerichtet, Daten zu funktional sicheren Daten eines bestimmten Sicherheitslevels zu verarbeiten und diesen Daten anschließend ein Kennzeichnungsattribut hinzu zu fügen, welches die Eignung dieser Daten für den Einsatz dieses bestimmten Sicherheitslevels kennzeichnet. Ergänzend oder alternativ ist die sichere Hardware- und/oder Software-Komponente dazu eingerichtet, nach Erhalt von Daten, welche zu funktional sicheren Daten eines bestimmten Sicherheitslevels verarbeit sind und denen ein Kennzeichnungsattribut hinzugefügt ist, welches die Eignung dieser Daten für den Einsatz dieses bestimmten Sicherheitslevels kennzeichnet, das diesen Daten hinzugefügte Kennzeichnungsattribut dahingehend zu prüfen, ob der Sicherheitslevel, den dieses Kennzeichnungsattribut kennzeichnet gegenüber dem Sicherheitslevel, welchem die Hardware- und/oder Software-Komponente genügt, gleich oder ungleich ist, und, wenn die Prüfung ungleiche Sicherheitslevel ergibt, eine Weiterverarbeitung der Daten auf dem geringeren Sicherheitslevel basierend durchzuführen

Die vorstehend genannten und weiteren Merkmale der Erfindung werden anhand der nachfolgenden Beschreibung von Ausführungsbeispielen unter Bezugnahme auf die beigefügte Zeichnung näher erläutert und/oder ersichtlich, wobei es sich versteht, dass diese Merkmale nicht nur in der jeweils beschriebenen Kombination sondern auch in anderen Kombinationen oder in Alleinstellung verwendbar sind ohne den Rahmen der Erfindung zu verlassen.

In den in Bezug genommenen Zeichnungen zeigen:
- Fig. 1: eine stark vereinfachte Prinzipskizze eines Ausführungsbeispiels eines Sub-Systems mit wenigstens einer sicheren Hardware- und/oder Software-Komponente,
- Fig. 2: eine stark vereinfachte Prinzipskizze eines Ausführungsbeispiels eines aus Sub-Systemen aufgebauten Systems, wobei das System gemäß Ausführungsbeispiel aus zwei, jeweils wenigstens eine sichere Hardware- und/oder Software-Komponente umfassenden Sub-Systeme aufgebaut ist, und
- Fig. 3: eine stark vereinfachte Prinzipskizze einer Verarbeitung und Übertragung von Daten innerhalb eines Systems, welches beispielhaft aus drei Sub-Systemen mit jeweils wenigstens einer sicheren Hardware- und/oder Software-Komponente aufgebaut wird oder ist.

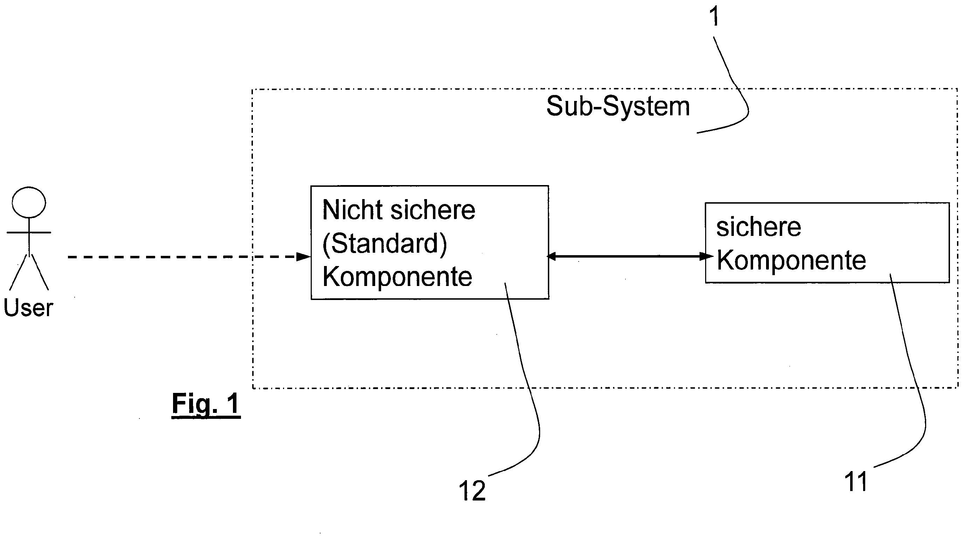

Fig. 1 zeigt eine stark vereinfachte Prinzipskizze eines Ausführungsbeispiels eines Sub-Systems 1 mit wenigstens einer sicheren Hardware- und/oder Software-Komponente 11, wobei die sichere Hardware- und/oder Software-Komponente 11 einem bestimmten Sicherheitslevel für eine funktional sichere Datenverarbeitung genügt. Eine solche sichere Komponente wird in der nachfolgenden Beschreibung und auch in den Zeichnungen auch als "Safety Context" bezeichnet.

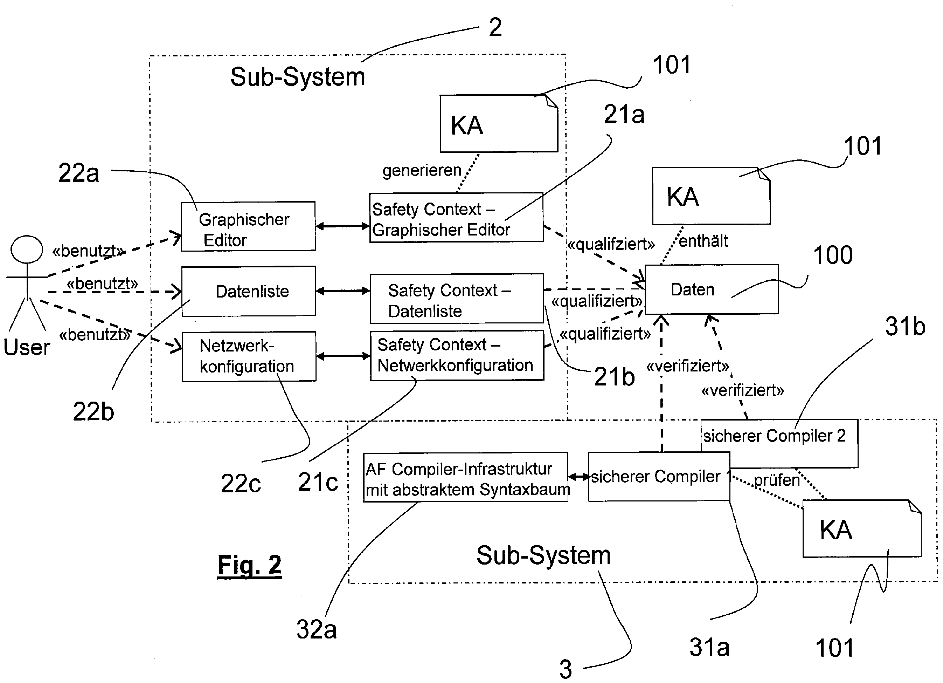

Die sichere Hardware- und/oder Software-Komponente 11 ist Teil einer in den Zeichnungen nicht weiter dargestellten Vorrichtung, insbesondere einer elektrischen, elektronischen und/oder programmierbar elektronischen Vorrichtung eines elektrischen, elektronischen und/oder programmierbar elektronischen Systems, welches aus wenigstens zwei Sub-Systemen aufgebaut wird oder ist, welche jeweils wenigstens eine sichere Hardware- und/oder Software-Komponente umfassen und jeweils einem bestimmten Sicherheitslevel für eine funktional sichere Datenverarbeitung genügen. Ein elektrisches, elektronisches und/oder programmierbar elektronisches Systems, welches aus wenigstens zwei Sub-Systemen aufgebaut ist, ist der stark vereinfachten Prinzipskizze eines Ausführungsbeispiels eines aus zwei Sub-Systemen 2 und 3 aufgebauten Systems gemäß Fig. 2 zu entnehmen, die jeweils wenigstens eine sichere Hardware- und/oder Software-Komponente 21a bis 21c bzw. 31a und 31b umfassen.

Gemäß einer Ausführungsform ist die sichere Hardware- und/oder Software-Komponente, z.B. die sichere Hardware- und/oder Software-Komponente 11, dazu eingerichtet, Daten zu funktional sicheren Daten eines bestimmten Sicherheitslevels zu verarbeiten und diesen Daten anschließend ein Kennzeichnungsattribut hinzu zu fügen, welches die Eignung dieser Daten für den Einsatz dieses bestimmten Sicherheitslevels kennzeichnet. Eine solche sichere Komponente produziert folglich funktional sichere Daten. Eine Vorrichtung oder ein Sub-System mit einer oder einer Mehrzahl von solchen sicheren Komponenten, die funktional sichere Daten produzieren, wird nachfolgend auch als "Safety Server" bezeichnet.

Gemäß einer weiteren Ausführungsform kann die sichere Hardware- und/oder Software-Komponente, z.B. die sichere Hardware- und/oder Software-Komponente 11, jedoch auch dazu eingerichtet sein, nach Erhalt von Daten, welche zu funktional sicheren Daten eines bestimmten Sicherheitslevels verarbeitet sind und denen ein Kennzeichnungsattribut hinzugefügt ist, welches die Eignung dieser Daten für den Einsatz dieses bestimmten Sicherheitslevels kennzeichnet, das diesen Daten hinzugefügte Kennzeichnungsattribut dahingehend zu prüfen, ob der Sicherheitslevel, den dieses Kennzeichnungsattribut kennzeichnet gegenüber dem Sicherheitslevel, welchem die Hardware- und/oder Software-Komponente genügt, gleich oder ungleich ist, und, wenn die Prüfung ungleiche Sicherheitslevel ergibt, eine Weiterverarbeitung der Daten auf dem geringeren Sicherheitslevel basierend durchzuführen. Eine solche sichere Komponente konsumiert folglich zunächst funktional sichere Daten und wertet diese hierbei aus. Eine Vorrichtung oder ein Sub-System mit einer oder einer Mehrzahl von solchen sicheren Komponenten, die funktional sichere Daten konsumieren, wird nachfolgend auch als "Safety Client" bezeichnet.

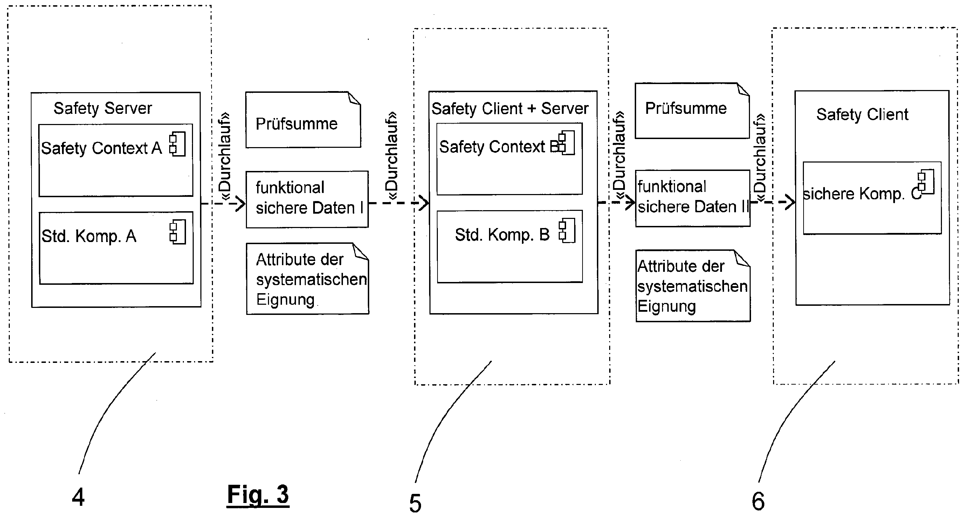

Im Rahmen der Erfindung kann eine sichere Komponente, wie z.B. die mit "Safety-Context B" bezeichnete sichere Komponente innerhalb eines Sub-Systems 5 der Fig. 3, auch zunächst funktional sichere Daten konsumieren und hierbei auswerten und anschließend wiederum funktional sichere Daten produzieren. Eine Vorrichtung oder ein Sub-System mit einer oder einer Mehrzahl von sicheren Komponenten sowohl zum Auswerten von funktional sicheren Daten als auch zum Verändern oder erneutem Produzieren von funktional sicheren Daten, kann demnach, wie beispielsweise das Sub-System 5 der Fig. 3, sowohl die Rolle als Safety Server und als Safety Client annehmen.

Auch das Sub-System 1 der Fig. 1 ist somit im Rahmen der Erfindung zweckmäßig ferner Teil eines in Fig. 1 nicht weiter dargestellten übergeordneten Systems. Das Sub-System kann ferner zusätzlich zu der wenigstens einen sicheren Hardware- und/oder Software-Komponente 11 auch aus wenigstens einer nicht-sicheren Hardware- und/oder Software-Komponente 12 aufgebaut sein. Das Sub-System 1 kann beispielsweise ein Programmiersystem sein, mittels welchem ein Benutzer "user", insbesondere ein Programmierer, ein sicheres Steuerungsprogramm mittels dazu geeigneter Software-komponenten erstellt. In einem solchen Fall, d.h., wenn ein Sub-System, wie z.B. das Sub-system 1 zusätzlich zu der wenigstens einen sicheren Hardware- und/oder Software-Komponente 11 auch aus wenigstens einer nicht-sicheren Hardware- und/oder Software-Komponente 12 aufgebaut ist, wird eine Verarbeitung von Daten durch die nicht-sichere Hardware- und/oder Software-Komponente 12 von der sicheren Hardware- und/oder Software-Komponente 11 des Sub-Systems dahingehend überwacht, dass die Daten während der Verarbeitung nicht korrumpiert werden, wie nachfolgend noch näher beschrieben wird. Durch die Überwachung der Standard Komponenten durch die sicheren Komponenten ergibt sich folglich wiederum ein funktional sicheres Sub-System.

Im Rahmen der Erfindung werden nunmehr innerhalb eines aus wenigstens zwei funktional sicheren Sub-Systemen aufgebauten Systems Daten mittels sicherer Hardware- und/oder Software-Komponente eines ersten Subsystems zunächst zu funktional sicheren Daten eines ersten Sicherheitslevels verarbeitet. Anschließend fügt das erste Sub-System diesen Daten noch wenigstens ein Kennzeichnungsattribut hinzu, welches die Eignung dieser Daten für den Einsatz dieses ersten Sicherheitslevels kennzeichnet.

Werden anschließend diese Daten einschließlich des hinzugefügten Kennzeichnungsattributs von diesem ersten Sub-System an ein zweites dieser Sub-Systeme übertragen und von diesem einschließlich des hinzugefügten Kennzeichnungsattributs empfangen, prüft das zweite Sub-System das empfangene Kennzeichnungsattribut mittels dessen sicherer Hardware- und/oder Software-Komponente dahingehend, ob der Sicherheitslevel, den dieses Kennzeichnungsattribut kennzeichnet gegenüber dem Sicherheitslevel, welchem das zweite Sub-System genügt, gleich oder ungleich ist. Ergibt die Prüfung ungleiche Sicherheitslevel, erfolgt ein funktional sicheres Weiterverarbeiten der Daten durch das zweite Sub-System in jedem Fall basierend auf dem geringeren Sicherheitslevel.

Wie vorstehend bereits erwähnt, ist ein solches funktional sicheres elektrisches, elektronisches und/oder programmierbar elektronisches System, welches aus wenigstens zwei Sub-Systemen aufgebaut wird oder ist, welche jeweils wenigstens eine sichere Hardware- und/oder Software-Komponente umfassen und jeweils einem bestimmten Sicherheitslevel für eine funktional sichere Datenverarbeitung genügen, beispielhaft der Fig. 2 zu entnehmen. Ein erstes Sub-System 2 stellt hier z.B. eine Benutzeroberfläche bereit, auf welches ein Benutzer "user" zugreifen kann, um ein Steuerungsprogram zu generieren, welches anschließend an ein zweites Sub-System 3 übertragen werden soll. Die sicheren Hardware- und/oder Software-Komponenten 21a, 21b, 21c des ersten Sub-Systems 2 können somit z.B. eine sichere Programeditor-Komponente 21a, eine sichere Datenliste-Komponente 21b und/oder z.B. eine sichere Netzwerk-Konfigurationskomponente 21c beinhalten. Das Sub-System kann hierbei nur derartige sichere Komponenten beinhalten oder aber, wie bei der Ausführungsform nach Fig. 2 zusätzlich aus nicht-sicheren Hardware- und/oder Software-Komponente 22a, 22b und/oder 22c, wie z.B. einer nicht-sicheren Programeditor-Komponente 22a, einer nicht-sicheren Datenliste-Komponente 22b und/oder z.B. einer nicht-sicheren Netzwerk-Konfigurationskomponente 22c aufgebaut sein.

Ein zweites Sub-System 3 stellt hier dann z.B. eine Compilerumgebung bereit, an welches das mittels des Sub-Systems 2 generierte Steuerprogramm übertragen wird. Die sicheren Hardware- und/oder Software-Komponenten 31a und 31b des zweiten Sub-Systems 3 können somit z.B. sichere Komponenten unterschiedlicher Compiler beinhalten. Das Sub-System 3 kann zusätzlich z.B. auch aus einer nicht-sicheren Hardware- und/oder Software-Komponente 32a aufgebaut sein, die z.B. eine nicht-sichere Compiler-Infrastruktur mit abstraktem Syntaxbaum beinhaltet.

Auch beim System gemäß Fig. 2 werden somit Produzenten von funktional sichereren Daten von Konsumenten von funktional sicheren Daten unterschieden.

Das Sub-System 2 stellt in diesem Beispiel demnach einen Produzenten oder "Safety Server" und das Sub-System 3 einen Konsumenten oder "Safety Client" dar, wobei im Beispiel gemäß Fig. 2 sowohl der "Safety Server" (das Sub-System 2) als auch der "Safety Client" (das Sub-System 3) gemischt aus Standard Komponenten und sicheren Komponenten bestehen. Wie vorstehend aufgezeigt, überwacht der Safety Server in einem solchen Fall die Daten, welche mithilfe von Standard Komponenten entstehen. Zweckmäßig überwacht auch der Safety Client in einem solchen Fall die Daten, welche mithilfe von Standard Komponenten ausgewertet werden. Eine solche Überwachung durch den Safety Server und den Safety Client ist bei Fig. 2 durch die jeweiligen Doppelpfeile zwischen den Standard Komponenten und sicheren Komponenten angedeutet.

Dabei wird sichergestellt, dass die Daten durch die Standard Komponenten nicht korrumpiert werden. Diese Überwachung findet zweckmäßig während und außerhalb von Datenänderungen statt. Bevorzugt werden hierzu vor der Verarbeitung von Daten durch eine nicht-sichere Hardware- und/oder Software-Komponente, Daten, welche nicht geändert werden sollen, von den übrigen Daten separiert und separat gesichert und/oder separat mit einer Prüfsumme belegt. Die Daten werden somit zweckmäßig segmentiert und also in Daten aufgeteilt, welche geändert werden sollen und in Daten, welche nicht geändert werden sollen. Die Daten welche geändert werden, sei es durch Löschen, Hinzufügen oder Modifizieren von Daten sind für die Änderung freigegeben. Die Daten welche nicht geändert werden dürfen, werden während der Änderung der zu ändernden Daten bevorzugt im RAM und/oder auf einer sonderten Festplatte mittels entsprechenden Verfahren wie z.B. Prüfsummen einschl. Hash-Werte gesichert. Dabei ist zweckmäßig zu beachten, den Bereich der geschützten Daten, das also sind die Daten, welche nicht geändert werden, möglichst groß zu gestalten.

Die korrekte Funktionalität der Datenüberwachung kann mittels geeigneter, auch an und für sich bekannter Methoden wie einer logischen Programmablaufüberwachung sichergestellt werden. Wenn, dann berechnet folglich nur eine sichere Komponente bzw. der Safety Context eines Safety Servers eine Prüfsumme und weitere Attribute, die die Datenkonsistenz und Datenintegrität belegt. Damit werden sowohl Datenänderungen außerhalb der sicheren Komponente bzw. des Safety Contexts als auch eine Fehlfunktion des Safety Servers sicher erkannt.

Abgesehen von der Prüfsumme zum Nachweis der Datenkonsistenz und Integrität generiert der Safety Context des Safety Servers, wie z.B. beim Safety Context 21a der Fig. 2 angedeutet, in jedem Fall für die vom ihm kommende Daten ein vorerwähntes Kennzeichnungsattribut 101 und qualifiziert dann diese Daten mit dem Kennzeichnungsattribut 101, so dass die vom Safety Server (z.B. Sub-System 2 der Fig.2) letztendlich an den Safety Client (z.B. Sub-System 3 der Fig.2) zu übertragenen Daten 100 auch das Kennzeichnungsattribut 101 enthalten.

Ein solches Kennzeichnungsattribut 101, welches die Eignung von Daten für den Einsatz eines bestimmten Sicherheitslevels kennzeichnet, identifiziert somit insbesondere auch die systematische Eignung des Safety Servers. Beispiele dieser Kennzeichnungsattribute sind ein maximal erreichbarer SIL (Sicherheitsintegritäts-Level), ein maximal erreichbarer PL (Performance Level) und/oder der Einsatz eines vordefinierten Sprachumfangs, bspw. gemäß LVL (Limited Variability Languages), oder FVL (Full Variability Language), welches hierdurch hinsichtlich einer nachfolgenden Weiterverarbeitung definiert ist.

Alle vorgenannten Prüfsummen und (erweiterten) Attribute, welche zur Datenqualifizierung eingesetzt werden, werden dann im weiteren Verlauf von einem die Daten empfangenen Safety Client(z.B. Sub-System 3 der Fig.2) ausgewertet. Wie vorstehend aufgezeigt, sind auch Safety Clients häufig zusammengesetzte Sub-Systeme, welche somit nicht nur aus sicheren Komponenten bestehen sondern auch aus Standard Komponenten bestehen, jedoch funktional sicher qualifizierte Daten insbesondere auch mittels der sicheren Komponenten sicherheitsgerichtet auswerten. Dazu verifiziert der Safety Client zweckmäßig sowohl eine gegebenenfalls mit den empfangenen Daten mit empfangene Prüfsumme zum Nachweis der Datenkonsistenz und Datenintegrität sowie die Kennzeichnungsattribute, welche die systematische Eignung der funktional sicheren Daten beschreiben. Stellt der Safety Client einen Verstoß der Dateninkonsistenz oder Datenintegrität fest oder die systematische Eignung der Daten ist inkompatibel zu der systematischen Eignung des Safety Clients, so werden die Daten vom Safety Client in zweckmäßiger Ausführung nicht funktional sicher verarbeitet. Eine Verarbeitung unter diesen Umstand kann somit nur unter dem Verlust eines Sicherheitsintegritäts-Levels erfolgen. Mit anderen Worten, werden die empfangenen Daten durch dieses zweite Sub-System mittels dessen sicherer Hardware- und/oder Software-Komponente hinsichtlich Datenunverfälschtheit ausgewertet und in zweckmäßiger Ausführung nur dann funktional sicher weiterverarbeitet, sofern auf der Auswertung basierend auf die Unverfälschtheit der Daten erkannt wird. In zweckmäßiger Ausführung jedoch werden bei der Kombination von Sub-Systemen mit unterschiedlicher systematischer Eignung, Kennzeichnungsattribute immer an den geringeren Sicherheitslevel angepasst, also z.B. auf den Wert des geringeren Sicherheitsintegritäts-Levels gesetzt. Folglich wird nach der Übertragung von Daten zwischen zwei Sub-Systemen das den Daten hinzugefügte Kennungsattribut durch das empfangene Sub-System bevorzugt immer auf ein Kennungsattribut gesetzt, welches den geringsten Sicherheitslevel kennzeichnet, und zwar aus der Gruppe der Sicherheitslevel, welchen die bei dieser Übertragung beteiligten Sub-Systeme genügen und für welchen die übertragenen Daten bei dieser Übertragung als geeignet gekennzeichnet sind.

Werden die funktional sicheren Daten weder geändert noch sicherheitsgerichtet weiterverarbeitet, so können im Sinne eines schwarzen Kanals ferner grundsätzlich beliebig viele Standard Komponenten für den Weitertransport der Daten bzw. deren Speicherung beteiligt sein.

Der vorstehend beschriebene Systemaufbau bzw. das damit umgesetzte Verfahren kann in äußerst zweckmäßiger Weise Anwendung in der gesamten Prozesskette vom Programmiersystem bis hin zum sicheren Steuerungssystem finden.

Basierend auf der Fig. 3 wird nachfolgend nochmals ein weiteres bevorzugtes Ausführungsbeispiel beschrieben.

Es wird hierbei angenommen, dass ein Maschinenhersteller zur Risikominderung einer Maschine eine Schutzeinrichtung einsetzt, welche z.B. einen Not-Halt und eine berührungslos wirkende Schutzeinrichtung (BWS) besitzt. Dies ist in der Regel ein Not-AusSchalter, der dazu dient, die Maschine im Gefahrenfall oder zur Abwendung einer Gefahr schnell in einen sicheren Zustand zu versetzen sowie als BWS z.B. ein Lichtvorhang, ein Induktiver Näherungsschalter oder ein kapazitativer Abstandssensor.

Nur wenn beide Schutzeinrichtungen den sicheren Zustand melden darf ein Antrieb aktiviert werden. Diese Schutzeinrichtung wird von einer sicheren Steuerung überwacht, die mit einem Programmiersystem programmiert wird. Dazu erstellt ein Programmierer ein sicheres Steuerungsprogramm mittels einer dazu geeigneten Software. Diese Software besteht sowohl ans Standard als auch sicheren Komponenten. Durch die Überwachung der Standard Komponenten durch die sicheren Komponenten ergibt sich ein funktional sicheres System. Der Programmierer kann somit das System für den Einsatz in der Sicherheitstechnik verwenden. Exemplarisch und vereinfacht setzt sich das System wie folgt zusammen.

Das sichere Steuerungsprogramm wird mittels eines Programmeditors entwickelt. Dieser Programmeditor ist bei Fig. 3 durch das Sub-System 4 angezeigt. Der Programmeditor besteht aus Standard Softwarekomponenten, bei Fig. 3 mit "Std. Komp. A" des Sub-Systems 4 angezeigt. Diese ermöglichen die Eingabe und Anzeige des Steuerungsprogramms. Weiterhin besteht der Programmeditor im Kontext der Sicherheitstechnik aus sicheren Softwarekomponenten, bei Fig. 3 mit "Safety Context A" des Sub-Systems 4 angezeigt. Die sicheren Softwarekomponenten Überwachen die korrekte Funktionsweise des Programmeditors und stellen die Integrität der Daten des Steuerungsprogramm sicher. Die sicheren Softwarekomponenten qualifizieren die Daten des sicheren Anwendungsprogramms, d.h. im vorliegenden Beispiel des Steuerungsprogrammes mit den vorstehend beschriebenen sicherheitstechnischen Kennzeichnungsattributen sowie in zweckmäßiger Weise den Prüfsummen und (erweiterten) Attributen. Der Programmeditor und also das Sub-System der Fig. 3 stellen somit einen Safety Server dar.

Die Daten des Steuerungsprogrammes werden an mindestens einen Compiler übergeben, um aus den Programmquellen ausführbaren Maschinencode für die Sicherheitssteuerung zu erzeugen. Dieser mindestens einen Compiler ist bei Fig. 3 durch das Sub-System 5 angezeigt. Die Übergabe kann auch über eine Zwischenspeicherung auf Festplatte oder anderen nicht flüchtigen Speichermedien erfolgen. Dabei verifiziert der mindestens eine Compiler die Datenintegrität sowie die Systematische Eignung der Daten, welche durch die sicherheitstechnischen Attribute, d.h. durch die vorstehend beschriebenen sicherheitstechnischen Kennzeichnungsattribute und in zweckmäßiger Weise die Prüfsummen und (erweiterten) Attributen, definiert sind. Ist die Integrität verletzt bzw. entsprechen die Daten nicht der geforderten systematischen Eignung, so wird die Weiterverarbeitung nicht funktional sicher weitergeführt. In diesem Verfahrensschritt agiert der mindestens eine Compiler folglich als Safety Client (vgl. Sub-System 5 der Fig. 3) .

Verarbeitet der mindestens eine Compiler die Programmquellen zu ausführbaren Maschinencode so wird zweckmäßig eine Prüfsumme zur Datenintegrität auf dem Maschinencode berechnet. Weiterhin wird der Maschinencode mit den sicherheitstechnischen Kennzeichnungsattributen versehen. Diese können identisch mit denen der Programmquellen sein, bzw. können ergänzt oder reduziert werden. Das heißt, in der praktischen Umsetzung der Erfindung können die Kennzeichnungsattribute nach einer Verarbeitung von Daten kein höheres Sicherheitsniveau ausweisen als die Kennzeichnungsattribute der Quelldaten. In diesem Verfahrensschritt dient der mindestens eine Compiler somit als Safety Server(vgl. Sub-System 5 der Fig. 3).

Über eine Kommunikationsbeziehung zwischen sicherer Programmiersoftware und der sicheren Steuerung werden der Maschinencode und die dazugehörigen sicherheitsrelevanten Daten auf die sichere Steuerung übertragen. Im Sinne dieser Erfindung kann für diese Art der Kommunikation auch ein vorstehend als schwarzer Kanal eingesetzt werden, der dann weder die Rolle als Safety Client oder Safety Server einnimmt, da die Daten durch den Transport nicht verändert werden.

Die sichere Steuerung ist bei Fig. 3 durch das Sub-System 6 angezeigt.

Die sichere Steuerung nimmt den Maschinencode entgegen und verifiziert Datenintegrität sowie die systematische Eignung des Maschinencodes. Ist die Prüfung erfolgreich, so bringt die Sicherheitssteuerung den Maschinencode zur Ausführung. In dieser Erfindung ist die Sicherheitssteuerung somit wiederum ein Safety Client.

Da somit ein erfindungsgemäß aus verschiedenen Sub-Systemen aufgebautes System unterschiedliche Sicherheitslevel erkennt und eine Weiterverarbeitung von Daten stets auf dem geringeren von zwei unterschiedlichen Sicherheitsleveln durchführt, können die Anforderung an ein funktional sicheres Systems stets erfüllt werden. Bevorzugt wird hierbei jedoch, sofern die Verarbeitung von Daten durch die sichere Hardware- und/oder Software-Komponente eines Sub-Systems basierend auf einem Sicherheitslevel erfolgt ist, welcher geringer ist, als der Sicherheitslevel, dem dieses Sub-System genügt, dieses von diesem Sub-System dem in der Datenverarbeitungskette eines Systems nachfolgenden Sub-System und/oder einem Benutzer angezeigt.

### Bezugszeichenliste

1 Sub-System,
11 sichere Hardware- und/oder Software-Komponente,
12 nicht sichere (Standard-) Komponente;
2 Sub-System,
21a, 21b, 21c sichere Hardware- und/oder Software-Komponenten,
22a, 22b, 22c nicht sichere (Standard-) Komponenten;
3 Sub-System,
31a, 31b sichere Hardware- und/oder Software-Komponenten,
32a, 22b, 22c nicht sichere (Standard-) Komponenten;
4 Sub-System;
5 Sub-System;
6 Sub-System;
100 Daten;
101 Kennzeichnungsattribut;

## Patentansprüche

1. Verfahren zum Verarbeiten und Übertragen von Daten innerhalb eines funktional sicheren elektrischen, elektronischen und/oder programmierbar elektronischen Systems, welches aus wenigstens zwei Sub-Systemen aufgebaut wird, welche jeweils wenigstens eine sichere Hardware- und/oder Software-Komponente umfassen und jeweils einem bestimmten Sicherheitslevel für eine funktional sichere Datenverarbeitung genügen, mit folgenden Schritten:
Verarbeiten von Daten mittels der sicheren Hardware- und/oder Software-Komponente eines ersten der Sub-Systeme zu funktional sicheren Daten eines ersten Sicherheitslevels und Hinzufügen zu diesen Daten durch dieses erste Sub-System wenigstens ein Kennzeichnungsattribut, welches die Eignung dieser Daten für den Einsatz dieses ersten Sicherheitslevels kennzeichnet; und
Übertragen dieser Daten einschließlich des hinzugefügten Kennzeichnungsattributs von diesem ersten Sub-System an ein zweites dieser Sub-Systeme, und
Empfangen dieser Daten einschließlich des hinzugefügten Kennzeichnungsattributs durch dieses zweite Sub-System; und
Prüfen des empfangenen Kennzeichnungsattributs durch das zweite Sub-System mittels dessen sicherer Hardware- und/oder Software-Komponente dahingehend, ob der Sicherheitslevel, den dieses Kennzeichnungsattribut kennzeichnet gegenüber dem Sicherheitslevel, welchem das zweite Sub-System genügt, gleich oder ungleich ist, und, wenn die Prüfung ungleiche Sicherheitslevel ergibt funktional sicheres Weiterverarbeiten der Daten basierend auf dem geringeren Sicherheitslevel,
wobei durch das Kennzeichnungsattribut, durch welches die Eignung von Daten für den Einsatz dieses bestimmten Sicherheitslevels gekennzeichnet wird, hinsichtlich jeglicher Weiterverarbeitung dieser Daten ein maximal erreichbarer Sicherheitsintegritäts-Level und/oder der Einsatz eines vordefinierten Sprachumfangs, bspw. gemäß LVL (Limited Variability Languages), oder FVL (Full Variability Language) definiert wird.

2. Verfahren nach Anspruch 1, **dadurch gekennzeichnet, dass** die empfangenen Daten durch dieses zweite Sub-System mittels dessen sicherer Hardware- und/oder Software-Komponente hinsichtlich Datenunverfälschtheit ausgewertet werden und nur funktional sicher weiterverarbeitet werden, sofern auf der Auswertung basierend auf die Unverfälschtheit der Daten erkannt wird.

3. Verfahren nach Anspruch 1 oder 2, **dadurch gekennzeichnet, dass** die Verarbeitung von Daten durch die sichere Hardware- und/oder Software-Komponente eines Sub-Systems basierend auf einem Sicherheitslevel, welcher geringer ist, als der Sicherheitslevel, dem dieses Sub-System genügt, dem in einer Datenverarbeitungskette nachfolgenden Sub-System und/oder einem Benutzer angezeigt wird.

4. Verfahren nach einem der vorstehenden Ansprüche, **dadurch gekennzeichnet, dass** die wenigstens zwei Sub-Systeme auch aus jeweils wenigstens einer nicht-sicheren Hardware- und/oder Software-Komponente aufgebaut werden.

5. Verfahren nach vorstehendem Anspruch, **dadurch gekennzeichnet, dass** die Verarbeitung von Daten durch die nicht-sichere Hardware- und/oder Software-Komponente eines Sub-Systems von der sicheren Hardware- und/oder Software-Komponente dieses Sub-Systems dahingehend überwacht wird, dass die Daten während der Verarbeitung nicht korrumpiert werden.

6. Verfahren nach vorstehendem Anspruch, **dadurch gekennzeichnet, dass** vor der Verarbeitung von Daten durch die nicht-sichere Hardware- und/oder Software-Komponente, Daten, welche nicht geändert werden sollen, von den übrigen Daten separiert und separat gesichert werden und/oder separat mit einer Prüfsumme belegt werden.

7. Verfahren nach einem der vorstehenden Ansprüche, **dadurch gekennzeichnet, dass** nach der Übertragung von Daten zwischen zwei Sub-Systemen das den Daten hinzugefügte Kennungsattribut durch das empfangene Sub-System immer auf ein Kennungsattribut gesetzt wird, welches den geringsten Sicherheitslevel kennzeichnet, und zwar aus der Gruppe der Sicherheitslevel, welchen die bei dieser Übertragung beteiligten Sub-Systeme genügen und für welchen die übertragenen Daten bei dieser Übertragung als geeignet gekennzeichnet sind.

8. Vorrichtung zur Durchführung des Verfahrens nach einem der vorstehenden Ansprüche, umfassend eine sichere Hardware- und/oder Software-Komponente die einem bestimmten Sicherheitslevels für eine funktional sichere Datenverarbeitung genügt,
**dadurch gekennzeichnet,**
**dass** die sichere Hardware- und/oder Software-Komponente dazu eingerichtet ist,
- Daten zu funktional sicheren Daten eines bestimmten Sicherheitslevels zu verarbeiten und diesen Daten anschließend wenigstens ein Kennzeichnungsattribut hinzu zu fügen, welches die Eignung dieser Daten für den Einsatz dieses bestimmten Sicherheitslevels kennzeichnet,
und/oder dass die sichere Hardware- und/oder Software-Komponente dazu eingerichtet ist,
nach Erhalt von Daten, welche zu funktional sicheren Daten eines bestimmten Sicherheitslevels verarbeit sind und denen ein Kennzeichnungsattribut hinzugefügt ist, welches die Eignung dieser Daten für den Einsatz dieses bestimmten Sicherheitslevels kennzeichnet, das diesen Daten hinzugefügte Kennzeichnungsattribut dahingehend zu prüfen, ob der Sicherheitslevel, den dieses Kennzeichnungsattribut kennzeichnet gegenüber dem Sicherheitslevel, welchem die Hardware- und/oder Software-Komponente genügt, gleich oder ungleich ist, und, wenn die Prüfung ungleiche Sicherheitslevel ergibt, eine Weiterverarbeitung der Daten auf dem geringeren Sicherheitslevel basierend durchzuführen,
wobei durch das Kennzeichnungsattribut, durch welches die Eignung von Daten für den Einsatz dieses bestimmten Sicherheitslevels gekennzeichnet wird, hinsichtlich jeglicher Weiterverarbeitung dieser Daten ein maximal erreichbarer Sicherheitsintegritäts-Level und/oder der Einsatz eines vordefinierten Sprachumfangs, bspw. gemäß LVL (Limited Variability Languages), oder FVL (Full Variability Language) definiert wird.

## Claims

1. A method for processing and transmitting data within a functionally safe electrical, electronic and/or programmable system that is composed of at least two subsystems, each of which comprises at least one safety hardware and/or software component, and each of which complies with a specific safety level for functionally safe data processing, the method comprising the steps of:
processing data, using the safety hardware and/or software component of a first one of the subsystems, into functionally safe data of a first safety level and adding to said data, by said first subsystem, at least one indication attribute indicating suitability of said data for use at the first safety level; and
transmitting said data including the added indication attribute from said first subsystem to a second one of said subsystems, and receiving said data including the added indication attribute by said second subsystem; and
checking the received indication attribute by the safety hardware and/or software component of said second subsystem, whether the safety level indicated by said indication attribute is equal to or different from the safety level with which that the second subsystem is complying with, and
if the check reveals non-equal safety levels, further processing the data in functionally safe manner based on the lower safety level,
wherein the indication attribute identifying suitability of data for use at this specific safety level, defines with regard to any further processing of this data a maximum possible safety integrity level and/or use of a predefined language range, such as according to LVL (Limited Variability Languages), or FVL (Full Variability Language).

2. The method as claimed in claim 1, wherein the received data are evaluated with respect to integrity of the data, by the second subsystem using the safety hardware and/or software component thereof, and are further processed in functionally safe manner only if integrity of the data is detected on the basis of said evaluation.

3. The method as claimed in claim 1 or 2, wherein processing of data by the safety hardware and/or software component of a subsystem on the basis of a safety level which is lower than the safety level this subsystem is complying with, is notified to a subsystem downstream in a data processing chain and/or to a user.

4. The method as claimed in any of the preceding claims, wherein the at least two subsystems each include at least one non-safety hardware and/or software component.

5. The method as claimed in the preceding claim, wherein the processing of data by the non-safety hardware and/or software component of a subsystem is monitored by the safety hardware and/or software component of this subsystem so as to ensure that the data are not corrupted during the processing.

6. The method as claimed in the preceding claim, wherein prior to the processing of data by the non-safety hardware and/or software component, data which are not intended to be changed are separated from the remaining data and saved separately and/or separately have a checksum assigned thereto.

7. The method as claimed in any of the preceding claims, wherein, following the transmission of data between two subsystems, the indication attribute added to the data is always set, by the receiving subsystem, to an indication attribute indicating the least safety level of the group of safety levels the subsystems involved in the transmission are complying with and for which during the transmission the transmitted data are indicated as being suitable.

8. A device for carrying out the method as claimed in any of the preceding claims, comprising a safety hardware and/or software component that complies with a specific safety level for functionally safe data processing, **characterized in that**,
the safety hardware and/or software component is configured,
- to process data into functionally safe data of a specific safety level and then to add at least one indication attribute to said data, which indicates suitability of said data for use of this specific safety level;
and/or the safety hardware and/or software component is configured,
upon receipt of data that have been processed into functionally safe data of a specific safety level and to which an indication attribute has been added indicating suitability of said data for use of this specific safety level, to check the indication attribute added to said data to determine whether the safety level indicated by said indication attribute is equal to or different from the safety level the hardware and/or software component is complying with, and if the check reveals non-equal safety levels, to perform further processing of the data based on the lower safety level,
wherein the indication attribute identifying suitability of data for use at this specific safety level, defines with regard to any further processing of this data a maximum possible safety integrity level and/or use of a predefined language range, such as according to LVL (Limited Variability Languages), or FVL (Full Variability Language).

## Revendications

1. Procédé pour le traitement et la transmission de données à l'intérieur d'un système électrique, électronique et/ou électronique programmable à fonctionnement sécurisé, qui est constitué d'au moins deux sous-systèmes qui comprennent chacun au moins un composant matériel et/ou logiciel sécurisé et qui respectent chacun un niveau de sécurité déterminé pour un traitement de données fonctionnellement sécurisé, avec les étapes suivantes :
traitement de données au moyen du composant matériel et/ou du composant logiciel sécurisé d'un premier des sous-systèmes en données fonctionnellement sécurisées d'un premier niveau de sécurité et ajout à ces données, par ce premier sous-système, d'au moins un attribut d'identification, qui caractérise l'adéquation de ces données à une utilisation de ce premier niveau de sécurité ; et
transmission de ces données, y compris l'attribut d'identification ajouté, par ce premier sous-système à un deuxième de ces sous-systèmes et
réception de ces données, y compris l'attribut d'identification ajouté, par ce deuxième sous-système ; et
vérification de l'attribut d'identification reçu par le deuxième sous-système, au moyen de son composant matériel et/ou logiciel sécurisé, afin de déterminer si le niveau de sécurité qui caractérisé cet attribut d'identification est égal ou différent du niveau de sécurité que respecte le deuxième sous-système et, si la vérification indique que les niveaux de sécurité sont différents, traitement supplémentaire fonctionnellement sécurisé des données sur la base du niveau de sécurité le plus faible,
où l'attribut d'identification grâce auquel l'adéquation des données à une utilisation de ce niveau de sécurité déterminé est caractérisée, permet de définir, en ce qui concerne un traitement supplémentaire de ces données, un niveau d'intégrité de sécurité maximal possible et/ou l'utilisation d'un ensemble de langages, par exemple selon LVL (Limited Variability Languages) ou FVL (Full Variability Language).

2. Procédé selon la revendication 1, **caractérisé en ce que** les données reçues par ce deuxième sous-système sont analysées au moyen de son composant matériel et/ou logiciel sécurisé en ce qui concerne l'intégrité des données et ne sont traitées de manière fonctionnellement sécurisée que si, selon l'analyse, l'intégrité des données est détectée.

3. Procédé selon la revendication 1 ou 2, **caractérisé en ce que** le traitement des données par le composant matériel et/ou logiciel sécurisé d'un sous-système sur la base d'un niveau de sécurité qui est plus faible que le niveau de sécurité que respecte ce sous-système est affiché à l'attention d'un sous-système suivant dans une chaîne de traitement de données et/ou d'un utilisateur.

4. Procédé selon l'une des revendications précédentes, **caractérisé en ce que** les au moins deux sous-systèmes sont constitués chacun d'au moins un composant matériel et/ou logiciel non sécurisé.

5. Procédé selon l'une des revendications précédentes, **caractérisé en ce que** le traitement des données par le composant matériel et/ou logiciel non sécurisé d'un sous-système est surveillé par le composant matériel et/ou logiciel sécurisé de ce sous-système de façon à ce que les données ne soient pas corrompues pendant le traitement.

6. Procédé selon la revendication précédente, **caractérisé en ce que**, avant le traitement des données par le composant matériel et/ou logiciel non sécurisé, les données qui ne doivent pas être modifiées, sont séparées du reste des données et sont sécurisées séparément et/ou sont authentifiées avec une somme de contrôle.

7. Procédé selon l'une des revendications précédentes, **caractérisé en ce que**, après la transmission des données entre deux sous-systèmes, l'attribut d'identification ajouté aux données est réglé par le sous-système récepteur toujours à un attribut d'identification qui caractérisé le niveau de sécurité le plus bas, à savoir dans le groupe des niveaux de sécurité que respectent les sous-systèmes participant à cette transmission et pour lequel les données transmises sont identifiées, lors de cette transmission, comme étant appropriées.

8. Dispositif pour l'exécution du procédé selon l'une des revendications précédentes, comprenant un composant matériel et/ou logiciel sécurisé qui respecte un niveau de sécurité déterminé pour un traitement de données fonctionnellement sécurisé,
**caractérisé en ce que**
le composant matériel et/ou logiciel sécurisé est conçu
- pour traiter des données en données fonctionnellement sécurisées d'un niveau de sécurité déterminé et pour ajouter ensuite à ces données un attribut d'identification qui caractérise l'adéquation de ces données à une utilisation de ce niveau de sécurité déterminé,
et/ou **en ce que** le composant matériel et/ou logiciel sécurisé est conçu
après l'obtention des données qui sont traitées en données fonctionnellement sécurisées d'un niveau de sécurité déterminé, et auxquelles est ajouté un attribut d'identification, qui caractérise l'adéquation de ces données à l'utilisation de ce niveau de sécurité déterminé, pour vérifier cet attribut d'identification ajouté à ces données afin de déterminer si le niveau de sécurité que caractérise cet attribut d'identification est égal ou différent du niveau de sécurité que respecte le composant matériel et/ou logiciel, et, si la vérification indique des niveaux de sécurité différents, pour exécuter un traitement supplémentaire des données sur la base du niveau de sécurité le plus faible,
où l'attribut d'identification grâce auquel l'adéquation des données à une utilisation de ce niveau de sécurité déterminé est caractérisée, permet de définir, en ce qui concerne un traitement supplémentaire de ces données, un niveau d'intégrité de sécurité maximal possible et/ou l'utilisation d'un ensemble de langages, par exemple selon LVL (Limited Variability Languages) ou FVL (Full Variability Language).
